# EUROPEAN PATENT SPECIFICATION

(11) **EP 3 656 204 B1**
(45) Date of publication and mention of the grant of the patent: **15.12.2021**
(21) Application number: 19208495.2
(22) Date of filing: 12.11.2019
(51) Int. Cl.: A01G 7/04, A01G 25/09

(54) **METHOD AND APPARATUS FOR PLANT TREATMENT**
VERFAHREN UND VORRICHTUNG ZUR PFLANZENBEHANDLUNG
PROCÉDÉ ET APPAREIL POUR LE TRAITEMENT DES PLANTES

(30) Priority: 26.11.2018 IT 201800010557
(43) Date of publication of application: 27.05.2020
(73) Proprietor: C-LED S.R.L., 40026 Imola (BO) (IT)
(72) Inventor: Accorsi, Mattia, 40026 Imola (IT); Pasini, Alessandro, 40026 Imola (IT)
(74) Representative: Del Nero, Susanna

(56) References cited:
- DE-A1- 2 063 133
- DE-B3-102017 104 525
- US-A1- 2017 000 041

## Description

The present invention relates to the technical field of growing plants in greenhouses, or anyway in indoor environments. In particular, the invention relates to the use of UV-B radiation sources with the aim of dwarfing plants, i.e. to induce a more compact vegetative habitus in aromatic herbs, horticultural and ornamental plants without the use of chemical substances.

Dwarfing is a growing technique necessitated by the excessive vigour of some species, in particular in artificial conditions of growing, wherein due to the seasonal reduction of natural light, excessive heat, or sub-optimal micro-climatic conditions, plants or single branches tend to elongate. The excessive development of internodes determines a shape of the plant departing from commercial requirements, or anyway from a habitus which allows the best management of cultural techniques.

The plants grown in a controlled environment can incur in etiolation, lengthening more than normal, in which case they are called elongated.

The fundamental parameters to evaluate the dwarfing effect induced by a treatment are the distance between leaves (also called distance between nodes or length of internode), the overall length of the stem and the total number of leaves on an equal vegetative development in height.

In order to objectify the definition of dwarfed plant or commercially attractive plant, an index cm/leaves can be proposed as follows:
- Example of an elongated plant: a plant 10 cm high with 5 leaves = 2 cm/leaf;
- Example of a dwarfed plant: a plant 5 cm high with 5 leaves = 1 cm/leaf.

In the known art, plant dwarfing is normally obtained through the administration of specific products belonging to the group of plant growth regulators, based on hormones that can be synthetic chemical hormones or natural substances such as biostimulants and/or through the dosing of micro/macro nutrients and/or temperature control. E.g., for a description of paclobutrazol, one of the known chemical agents used as plant growth regulators, refer to the application WO2008020872 of Syngenta, in particular to paragraphs 0002, 0003, 0008-0010. Said paragraphs clearly state the advantages that can be obtained by using chemical and biochemical (biostimulants) agents, which modify the development of plants, altering their morphology (habitus) and their functional responses (flowering, etc.).

Nonetheless, there are special situations, e.g. organic farming, wherein the use of chemical products is forbidden.

It is known that sunlight affects plant growth and habitus. It is also known that the sun emits photons in a wide range of frequencies, which include ultraviolet light in its three bands UV-A (λ 315 ― 500 nm), UV-B (λ 280 ― 315 nm) and UV-C (λ 100 ― 280 nm). Due to the absorption of UV radiation by ozonosphere, about 99% of the UV radiation reaching the earth surface is UV-A radiation, in that nearly 100% of UV-C and 95% of UV-B radiation are absorbed by earth's atmosphere. UV radiations are the main responsible of skin aging due to collagen fibre damaging. High intensities of UV-B radiation are harmful for eyes, and a prolonged exposition can cause photokeratitis and photodermatitis. UV radiation ionizes skin DNA molecules, so that adjacent thymine and cytosine form covalent bonds. Such covalent bonds cause a distortion of DNA helix, interfering with DNA replication and working. All this can lead to mutations, which in their turn can induce skin cancer.

US2017000041 of Biolumic LTD discloses a method, and a device for administering the method, of treating a plant seedling to improve long-term hardiness and/or crop yield and/or quality through the step of exposing the plant seedling, prior to a subsequent growth phase, to ultra-violet (UV) irradiation with a wavelength between 280-310 nm.

Paragraph 0038 of US2017000041 states that "plant seedling" should be taken as meaning a young plant following germination from a seed, while claim 1 of the same document states that the seedling must be exposed to UV irradiation prior to a subsequent growth phase.

Moreover, it is worth highlighting that in no part of this document dwarfing is quoted: the document only refers to a generic improved size and shape of the crop (paragraph 0034).

In the article Early plant growth: identifying the end point of the seedling phase by Hanley et al., New Phytologist (2004) 163:61―66, it is stated that while it is relatively easy to recognize the start of the seedling phase as the protrusion of the radical and of the subsequent plumule from the seed, there is no general consensus as to when the plant ceases to be a seedling and simply becomes a juvenile plant. The article continues stating that it is common in the literature to find any small, nonreproductive plant referred to as seedling, without any clear indication of what developmental stage has been reached. One possible definition of seedling is a young plant still reliant on food reserves stored in the seed and cotyledons. Once the plant has switched its nutrient dependence from internal sources (seed and cotyledons) to external sources (autotrophic metabolism), it can then reasonably be considered to have passed through the seedling stage. The article by Hanley et al. describes experiments performed to highlight more reliable markers for defining the end of the seedling stage using two different kind of plants, an epigeal species, i.e. peas (*Pisum sativum*), and a hypogeal species, i.e. sunflowers (*Helianthus annuus*). The experimental data show that for both species the end of the seedling phase can be established around day 10-11.

These data agree with the duration of UV irradiation specified in paragraph 0059 of US2017000041, where it is stated that the method includes exposing the plant seedling to UV light for approximately 2-15 days, while paragraph 0061 states that more preferably the method includes exposing the plant seedling to UV light for approximately between 4 to 7 days. Comparing the two documents, it is apparent that the UV irradiation described in claim 1 of US2017000041 is limited to the seedling phase of the life of the young plant, for a maximum of 15 days (paragraph 0059 of US2017000041).

Here it is worth remembering that the growing times of some plants having commercial interest, i.e. the period between seed germination and the moment when the plant can be sold, are as follows:

**Table**

| *Species* | *days* |
|---|---|
| basil | 30-40 |
| strawberry | 30-45 |
| melon | 45 |
| watermelon | 40 |
| cucumber | 35 |
| zucchini/courgette | 30 |
| tomato | 35-60 |
| pepper | 40-65 |

DE2063133A1 of Franz Mueller describes an apparatus comprising a traditional irrigation plant, in its turn comprising an irrigation boom that moves back and forward along a pre-defined path in order to irrigate plants in a greenhouse.

It is worth mentioning that in a greenhouse the distance between light source and plants is fixed and is about 2-4 metres. This has the aim of homogenously distributing light on the entire canopy. Moreover, the lamps are placed along a two-dimensional grid fixed to lattices or other supports so as to irradiate the underlying surface with the exact quantity of light and correct homogeneous distribution.

DE102017104525 of Neofarms GmbH describes an apparatus to perform a method, comprising an indoor growing unit for plants, comprising an irrigation bar in its turn comprising LEDs that perform a photosynthesizing action.

Aim of the present invention is providing a method and an apparatus to increase the compactness of ornamental, horticultural and aromatic plants grown in artificial conditions, without the use of chemical substances.

This object is achieved by a method and an apparatus having the features of the independent claims. Advantageous embodiments and refinements are specified in claims dependent thereon.

The aim is obtained using UV-B radiation sources, i.e. radiation sources having a wavelength of 280-315 nm, which reduce or eliminate the use of chemical substances used to dwarf plants.

It is worth noting that in the course of testing, UV-A radiation (λ 315 ― 500 nm) and UV-C radiation (λ 100 ― 280 nm) were tested, too. The experimental results show that UV-A irradiation is useless, i.e. does not affects the habitus of irradiated plants, while UV-C radiation is harmful for plant tissues.

The method according to the present invention provides the irradiation of plants, generally placed at 0.2 ― 1 m from the radiation source, with UV-B radiation having a radiation periodicity and duration optimized for the specific plant to be dwarfed.

The UV irradiation treatment must be inserted in a protocol of continuative agronomic management for the whole productive process of plants. In fact, the distance between internodes that progressively form between the subsequent leaves has a generation process lasting up to the moment of plant selling. In order to obtain a compact plant, all the internodes must undergo the dwarfing treatment. In other words, if we take e.g. a tomato plant, the UV irradiation treatment must be performed after the first germination phases to the moment when the plant leaves the greenhouse to be sold, i.e. for a period lasting 35-60 days (see Table). Analogously, for all the plants, the UV irradiation treatment must be performed for the whole stay of the plant in the greenhouse or indoor growing unit, indicatively for the number of days indicated in said Table.

Preferably, the UV irradiation treatment is performed on young plants that are already provided with at least one true leaf. True leaves and cotyledons are developmentally and morphologically distinct. Cotyledons are formed during embryogenesis, along with the root and shoot meristems, and are therefore present in the seed prior to germination. True leaves are formed post-embryonically (i.e. after germination) from the shoot apical meristem, which is responsible for generating subsequent aerial portions of the plant. The cotyledons contain (or have access to) the stored food reserves of the seed, while the true leaf is photosynthesizing and shows that the young plant left the seedling phase and has become autotrophic.

In a first embodiment, the UV irradiation to obtain dwarfing is performed on plants grown in greenhouses, wherein typically there is provided an irrigation plant which is exploited to house LED lamps emitting UV-B radiation having a suitable wavelength. In this case, the UV-B lamps are mobile and move back and forth over the cultivated plants. In other words, plants are irradiated with UV radiations during the movement of the irrigation plant.

According to an embodiment, the lamps can be placed longitudinally or transversally with respect to the greenhouse length, so that radiation distribution on the cultivated surface can be optimized.

The emission of UV-B radiation can occur at the same time of plant irrigation; in this way, the use of the mixed irrigation/irradiation plant is optimized. Alternatively, the irrigation boom can perform the same back and forth movement needed to irrigate plants, emitting UV-B radiations in lieu of water; in other words, the emission of water and UV-B radiations occurs in a mutually exclusive way.

In a second embodiment, the dwarfing irradiation is performed inside growing units intended to be placed indoors. In this case, given the small dimensions at stake, the LED sources emitting UV-B radiation are stationary and are stationarily placed above the plants to be irradiated.

Indicatively, in order to obtain dwarfing, the parameters to be adjusted when administering UV-B radiations having a wavelength ranging 280 - 315 nm are:
- Irradiation duration, with a duration of 1-20 minutes per plant;
- Performed for a number of 24 h units indicatively between 10 and 60, which varies according to the characteristic growing time of a given plant (see Table);
- Radiometric power of UV-B LED lamps comprised between 50 and 1000 mW per lamp;
- Distance between UV-B LED lamps and leaf apex between 0.2 and 1 m.

In the case of the first embodiment, i.e. growing plants inside a greenhouse exploiting an already existing irrigation boom, another parameter must be taken into account:
- Sliding speed of the UV-B LED lamps above the plants variable between 0.1-10 m/min.

All the above-quoted parameters must be optimized according to the specific plant to be grown.

A first advantage of the present invention is obtaining an ideal growth of commercial plants, inducing a dwarfing effect without the use of chemical/hormonal synthetic substances. Said advantage is especially important in organic farming, wherein the use of chemical substances is forbidden.

A second advantage is dramatically reducing the probability of bacterial and fungal pathologies that normally affect the plants grown in artificial conditions, and therefore reducing the use of chemical substances used to control or eradicate said pathologies.

A third advantage of the present invention in its first embodiment lays in the possibility of exploiting a structure already existing in the greenhouse to perform the irradiation with UV-B radiation, therefore performing the dwarfing treatment without the need of new mechanical plants.

Further advantages and properties of the present invention are disclosed in the following description, in which exemplary embodiments of the present invention are explained in detail based on the drawings:
- Figure 1: Schematic representation of a greenhouse provided with an irrigation boom;
- Figure 2: An irrigation boom for greenhouses provided with LED lamps emitting UV-B radiation, axonometric view;
- Figure 3: Schematic representation of an irrigation half-bar modified according to the present invention, front view and top view;
- Figure 4: Two indoor growing units, axonometric view;
- Figure 5: Comparison between two lettuce plants, one of which underwent UV-B irradiation according to the present invention.

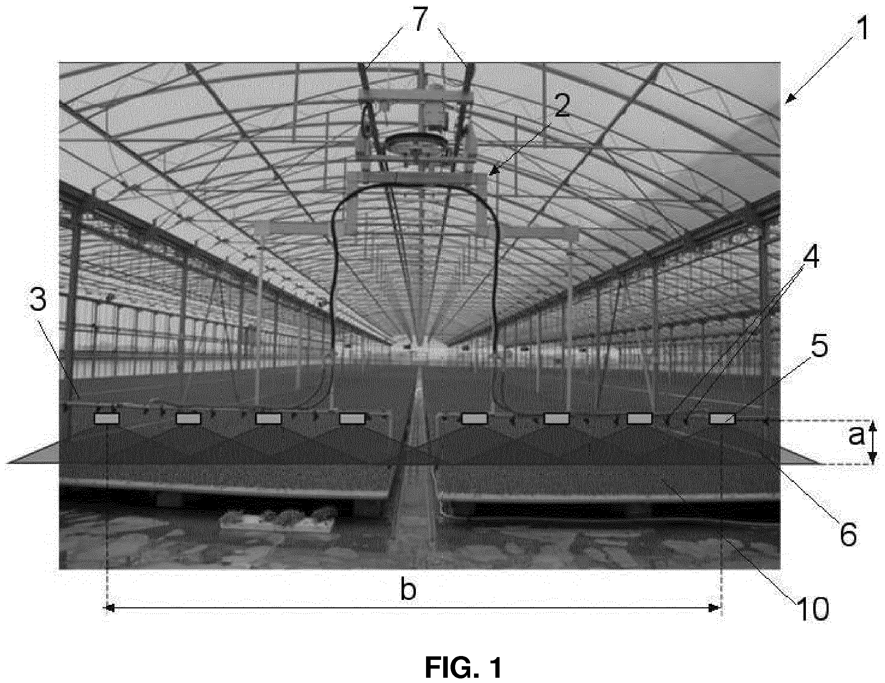

Figure 1 shows a schematic representation of the inside of a greenhouse 1, which is the first embodiment of the present invention.

Said greenhouse 1 is provided with a traditional irrigation boom 2, comprising arms supporting two irrigation half-bars 3. Said half-bars 3 support a plurality of nozzles 4 irrigating the underlying plants 10. Traditionally, the irrigation boom 2 provides that the irrigation bars 3, with their supporting arms, move along rails 7 fixed to the ceiling, so that the irrigating boom can irrigate the whole extension of the plants 10 inside the greenhouse.

Typically, said irrigation half-bars 3 are placed at a distance a from the leaf apex variable between 0.2 and 1 m, while the length b of an irrigation boom ranges 4 to 10 m. Typically, said irrigation boom moves back and forth for the whole greenhouse at a speed ranging 2-16 m/min.

The working of such an irrigation boom and the movements it can perform are well known to the skilled person and do not need further description.

According to the invention, to said irrigation half-bars 3 a plurality of LED lamps 5 are fixed, emitting UV-B radiation, i.e. radiations having a wavelength of 280-315 nm. In the embodiment represented in Figure 1, there are provided eight symmetrically placed LED lamp 5, four lamps for each half-bar 3.

Typically, the UV-B LEDs in such lamps emit a light cone 6 having an angle of aperture ranging 50-130°.

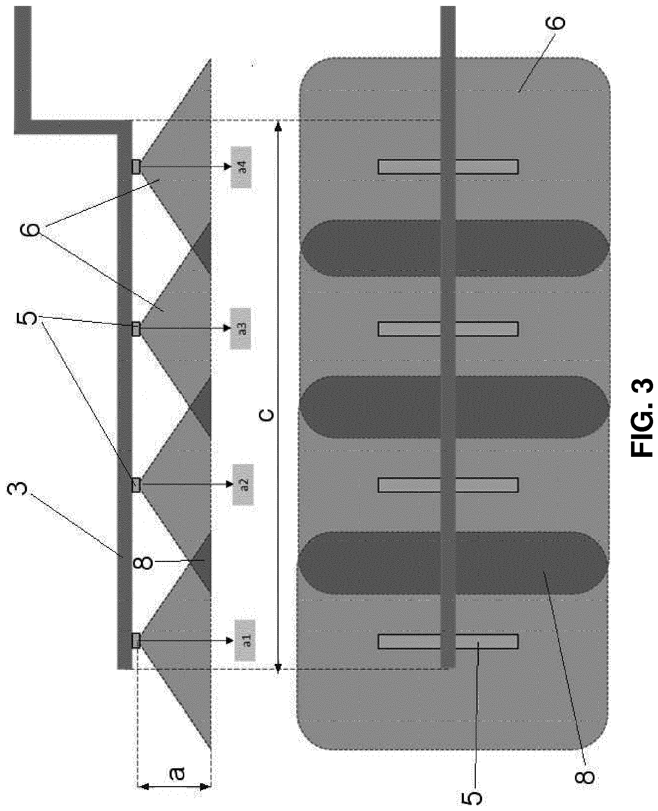

Preferably, such LED lamps 5 are fixed to said irrigation half-bars 3 so that the light cone emitted by each LED lamp 5 is at least partially overlapping to the light cones 6 emitted by the adjacent LED lamps 5, as represented in Figure 1 and 3.

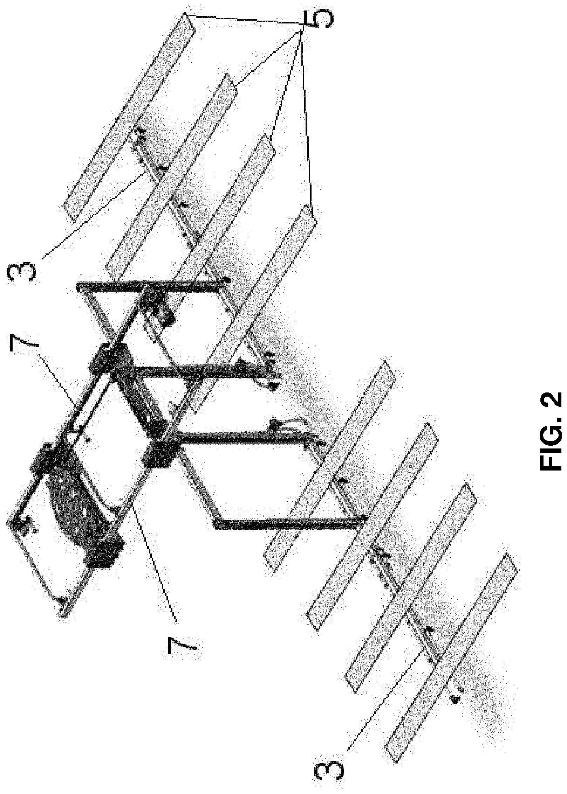

Figure 2 shows a traditional irrigation boom 2, to which eight LED lamps 5 were added according to the present invention.

In particular, in a top axonometric view Figure 2 shows two rails 7 on which the irrigation boom 2 slides in its back and forth movement inside the greenhouse. The two irrigation half-bars 3 carry each four LED lamps 5 emitting UV-B radiation. Said LED lamps 5 are placed perpendicularly to the irrigation half-bar 3, with a light distribution on, and covering of, the entire cultivated surface.

In alternative embodiments, obviously using a different number of LED lamps 5 or placing them differently on the irrigation half-bars 3 is possible.

Obviously, the irrigation boom 2 must be modified so as to bring electric supply to the UV-B LED lamps 5 fixed to the irrigation half-bar 3.

Said half-bars 3 must be electrified, which entails a certain degree of caution and protection, in order to avoid short circuits or electric shock to operators. In particular, the whole electric circuit must be provided with an at least IP67 degree of protection, wherein the various components, i.e. said lamps 5, power cables, link connectors, power supplies are all provided with a suitable degree of IP protection. Moreover, it is worth highlighting that designing a moving mixed hydraulic and electric structure is far from trivial, in that it requires the use of components, cables and wiring suitable for mobile laying.

Of course, the irrigation boom 2 must be provided with a not shown control unit allowing to set the working parameters, like the sliding speed of the irrigation half-bars 3, the switching on/off of LED lamps 5, the emission/no emission of water during the sliding of the irrigation boom. In a preferred embodiment, the control unit can be programmed to administer the UV-B radiation for a given time for a given number of 24-hours units.

Figure 3 shows a schematic representation of an irrigation half-bar 3 supporting four LED lamps 5 (a1, a2, a3, a4), each emitting its light cone 6. As already explained, the distance a between the irrigation half-bar 3 and the leaf apex can vary between 0.2 and 1 m, while the length of an irrigation half-bar 3 ranges 2 to 5 m.

Figure 3 allows to appreciate both the areas 8 wherein the light cones 6 emitted by LED lamps 5 overlap, and the areas irradiated by one single light cone 6. The Figure highlights that the entire cultivated area is uniformly irradiated by the radiations emitted by LED lamps 5, taking into account the fact that the peripheral areas of the light cones provide less energy with respect to the central areas of the light cone.

Obviously, the distance between two adjacent lamps 5 is chosen to obtain an area of overlapping light cones 6 ensuring a uniform irradiation of all the underlying plants, according to the power irradiated by the lamp and the angle of aperture of the light cone 6.

In an alternative embodiment, the LED lamps 5 can be placed longitudinally or transversally with respect to the length of the greenhouse, so as to optimize the light distribution on the surface of the cultivated area.

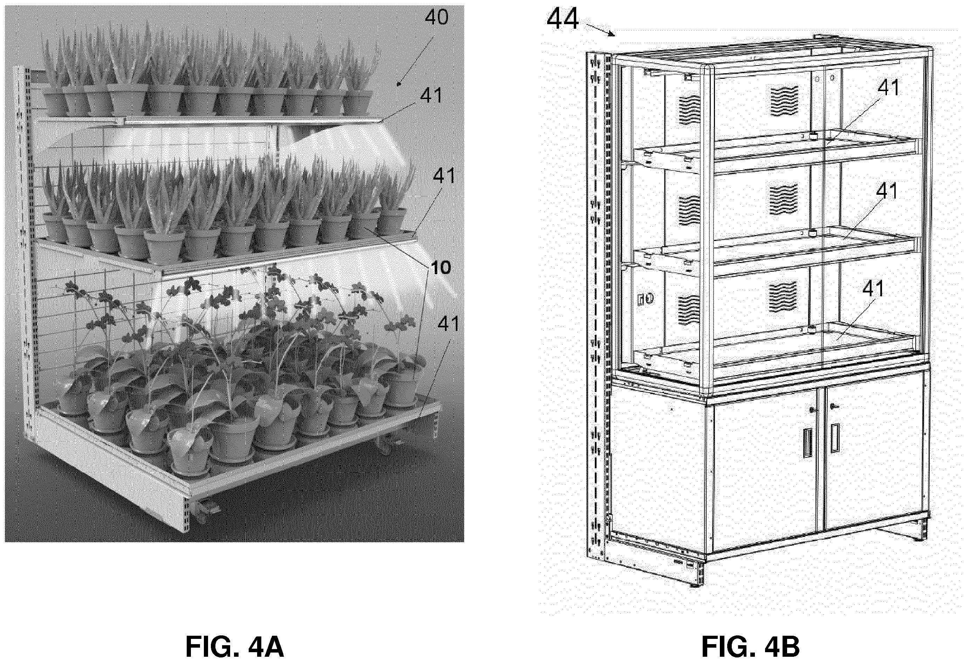

Figures 4A, 4B show a second embodiment alternative to the first embodiment shown in Figures 1-3, wherein plants are grown in an indoor growing unit. Such growing units are typically used in supermarkets, restaurants, or in houses. Substantially such growing units can be open, like the growing unit 40 shown in Figure 4A, or closed, like the growing unit 44 shown in Figure 4B. The working principle remains the same.

Substantially, such growing units 40, 44 are provided with at least a shelf 41 supporting ornamental, horticultural or aromatic plants 10 (shown in Figure 4A and not shown in Figure 4B).

On the underside of said shelves 41 not shown LED sources are placed, emitting radiations of suitable wavelength (e.g. red 620-670 nm; optionally blue 400-500 nm; optionally far red 710-850 nm) and optionally a fourth type of LEDs emitting visible white light (400-700 nm). The above-quoted wavelengths are photosynthetic radiations, i.e. radiations that induce photosynthesis in plants.

In the alternative embodiments shown in Figures 4A and 4B, in addition to said LED sources there is provided at least one LED source emitting UV-B radiation: in this case, obviously, the UV-B LED sources are stationary, and must be controlled by a control unit capable of controlling their emission in the ways discussed hereunder.

According to the present invention, in pre-set moments of a unit of 24 hours, the plants grown in artificial conditions are irradiated by the UV-B lamps/sources for pre-defined times.

One reason to prefer the performance of UV-B irradiation during the night is linked to the risks connected to the use of UV-B radiations in presence of humans: photodermatitis and photokeratitis, induction of mutations, and eventually the risk of inducing cancer in humans.

Moreover, since UV-B irradiation can induce the formation of free radicals, irradiating plants during the night-time is preferred even for preventing the formation of free radicals from water molecules (normally irrigation is performed during daytime). In other words, the emission of water and UV-B radiations performed by the irrigation boom is mutually exclusive.

Nonetheless, it is to be noted that performing simultaneously UV-B irradiation and irrigation would allow to optimize the energy needed to move the irrigation boom 2 of the first embodiment.

The parameters of the irradiation treatment must be optimized for each commercial plant to be treated. Indicatively, the parameters to be adjusted when administering UV-B radiations with a wavelength of 280-315 nm are:
- Irradiation for a duration of 1-20 minutes per plant;
- For a number of 24 h units indicatively between 10 and 60, which varies according to the growing time characteristic of each plant (see Table);
- Radiometric power of the LED lamp comprised between 50 and 1000 mW per lamp;
- Distance between LED lamps and leaf apex comprised between 0.2 and 1 m.

In the case of the first embodiment, the cultivation in greenhouse exploiting an already existing irrigation boom, a further parameter must be adjusted:
- Sliding speed of the UV-B LED lamps above the cultivated plants, variable between 0.1-10 m/min.

E.g., for basil plants a UV-B irradiation of a duration of 1-10 minutes in 24 hours, in greenhouse with half-bars 3 moving at a speed of 0.2-10 m/min, treatment for 20 nights up to the sale of plants in vase, was shown to be sufficient to confer to the basil plant the desired habitus.

In the same way, for plants of strawberry, thyme, rosemary, melon, watermelon, cucumber, zucchini, tomato and pepper UV-B irradiation with a duration of 1-20 minutes in 24 hours at a speed of movement of 2-10 m/in in greenhouse was sufficient to obtain a compact habitus and a decrease in plant pathologies. Again as an example, strawberries were irradiated for 45 nights at a distance of 0.2-0.5 m between LED lamp and leaf apex with a period of treatment for each plant of 5±2 minutes.

In this context, it is worth highlighting that said plants underwent UV irradiation once out from their seedling chamber or area (area in case of germination in greenhouse), i.e. about 10 days after germination, when plants were already provided with at least one true leaf.

As the presence of a true leaf signals that the plant left its seedling phase and entered into its autotrophic phase, the UV irradiation treatment is preferably administered to plants that left their seedling phase.

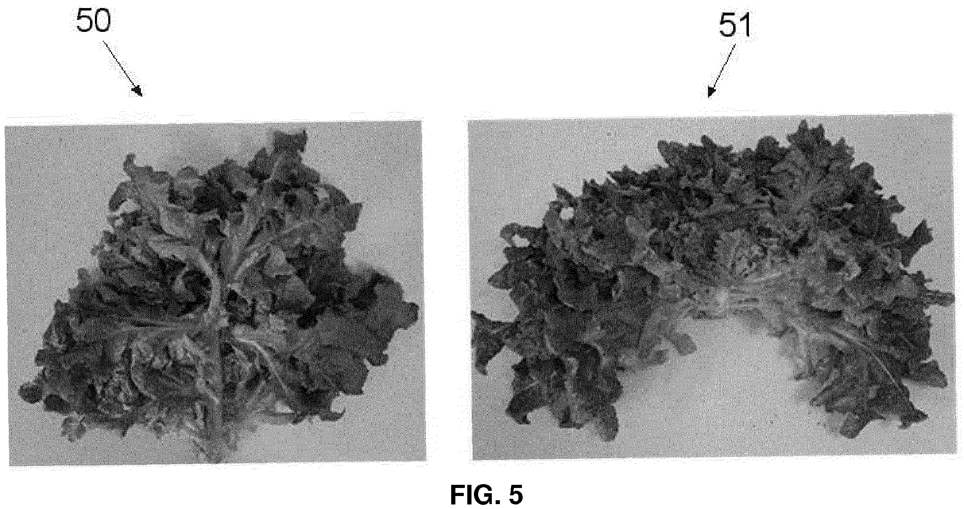

Figure 5 shows two lettuce plants 50, 51 for comparison. The two plants were seeded and grown in the same way and for the same time, but for the fact that the plant 50 on the left underwent no treatment for dwarfing and assumed an elongated habitus while the plant 51 on the right underwent a dwarfing treatment according to the present invention. In particular, the dwarfed plant 51 was irradiated for 10 minutes every night for 10 nights. The days of growth being the same, the internodes of the elongated plant 50 are longer with respect to those of the dwarfed plant 51. The habitus of the dwarfed plant 51 is markedly more compact and the lettuce plant is commercially more attractive.

The elongated plant 50 is provided with a length of internodes comprised between 1 and 4 cm, according to leaf stage, while the dwarfed plant 51 has a non-detectable internode that is shorter than 1-2 mm; in other words there is no distance between the different leaf stages.

It is worth adding that the dwarfing treatment affects the organoleptic parameters of vegetables, too. E.g. comparing the two lettuce plants 50, 51, the dwarfed plant 51 is crunchier than the elongated plant 50.
- 1: greenhouse
- 2: irrigation boom
- 3: irrigation half-bar
- 4: irrigation nozzle
- 5: LED lamps
- 6: light cone
- 7: rail
- 8: overlapping area between light cones
- 10: plants
- 40: open growing unit
- 41: shelf
- 44: closed growing unit
- 50: elongated plant
- 51: dwarfed plant

## Claims

1. Method for dwarfing ornamental, horticultural plants and aromatic herbs grown in greenhouse or in indoor growing units,
wherein plants are irradiated with UV-B radiations having a wavelength of 280 - 315 nm **characterized in that** the plants are irradiated with said UV-B radiation for the whole period of staying of the plant in a greenhouse or in an indoor growing unit.

2. Method for dwarfing plants according to claim 1, wherein said UV-B radiation are emitted by LED (5) lamps/sources with the following parameters:
― duration of irradiation: 1-20 minutes per plant;
― for a number of 24h units indicatively between 10 and 60 units, variable according to the greenhouse growing time characteristic of the plant;
― radiometric power of the LED UV-B (5) lamps comprised between 50 and 1000 mW per lamp;
― distance between UV-B LED lamps/sources and leaf apex ranging 0.2 to 1 m.

3. Method for dwarfing plants according to claim 1 or 2, wherein the UV-B irradiation is performed on plants after the appearance of at least one true leaf, i.e. in a post-seedling phase.

4. Method for dwarfing plants according to claim 1-3, wherein the UV-B irradiation occurs simultaneously with plant irrigation.

5. Method for dwarfing plants according to claims 1-3, wherein the UV-B irradiation occurs separately from the irrigation of plants.

6. Method for dwarfing plants according to claim 5, wherein the UV-B irradiation occurs preferably during the night in case of greenhouse cultivation, or during the switching off of the photosynthetically active sources in case of indoor growing of plants in growing units.

7. Apparatus (2) for performing the method according to claims 1 to 6, comprising a traditional irrigation boom (2) in its turn comprising at least an irrigation half-bar (3) moving back and forth along a pre-defined path to irrigate the plants in the greenhouse
**characterized in that**
to the irrigation half-bar (3) a number of LED lamps (5) proportional to the length of the bar itself is fixed, (3) emitting UV-B radiations,
**and in that**
it comprises a control unit for setting the UV-B irradiation parameters: i.e. the duration of irradiation, the number of 24 hours units of irradiation, and whether the irradiation is performed at the same time as irrigation or in mutually exclusive way.

8. Apparatus according to claim 7, wherein said UV-B LED lamps (5) are provided with LEDs emitting a light cone (6) having an aperture ranging 50° to 130°.

9. Apparatus according to claim 7 or 8, wherein said LED lamps (5) are arranged so that the light cone (6) emitted by each LED lamp (5) is partially overlapping with the light cone (6) emitted by the adjacent LED lamps (5).

10. Apparatus according to claims 7-9, wherein the sliding speed of the UV-B LED lamps (5) fixed on the irrigating half-bars (3) moving above cultivated plants (10) ranges 0.1-10 m/min.

11. Apparatus (40, 44) for performing said dwarfing method comprising an indoor growing unit for growing ornamental, horticultural and aromatic plants, in its turn comprising at least one shelf (41) above which there is provided at least a LED source having a photosynthetizing action and at least a LED source emitting UV-B radiations, said lamps being controlled by a control unit capable of controlling said UV-B LED sources so that they emit UV-B radiations for dwarfing plants according to claims 1 to 6.

12. Apparatus according to one or more of claims 7 to 11, wherein the distance between UV-B LED sources (5) and leaf apex ranges 0.2 to 1 m.

13. Apparatus according to one or more of claims 7 to 12, wherein the radiometric power of said UV-B LED lamps (5) sources ranges 50 to 1000 mW per lamp/source.

## Patentansprüche

1. Verfahren zum Verzwergen von Zier-, Gartenbaupflanzen und aromatischen Kräutern, die im Gewächshaus oder in Innenräumen kultiviert werden,
wobei Pflanzen mit UV-B-Strahlung bestrahlt werden, die eine Wellenlänge von 280―315 nm aufweisen, **dadurch gekennzeichnet, dass** die Pflanzen während des gesamten Aufenthalts der Pflanze in einem Gewächshaus oder in einem Innenraum mit der UV-B-Strahlung bestrahlt werden.

2. Verfahren zum Verzwergen von Pflanzen nach Anspruch 1, wobei die UV-B-Strahlung von Lampen/Quellen mit LED (5) mit den folgenden Parametern emittiert wird:
- Bestrahlungsdauer: 1-20 Minuten pro Pflanze;
- über eine Anzahl von 24 Stunden-Einheiten, die indikativ zwischen 10 und 60 Einheiten liegt, variabel gemäß der für die Pflanze charakteristischen Gewächshaus-Kultivierungszeit;
- radiometrische Leistung der Lampen mit LED UV-B (5), die zwischen 50 und 1000 mW pro Lampe liegt;
- Abstand zwischen UV-B-LED-Lampen/-Quellen und der Blattspitze in einem Bereich von 0,2 bis 1 m.

3. Verfahren zum Verzwergen von Pflanzen nach Anspruch 1 oder 2, wobei die UV-B-Bestrahlung an Pflanzen nach Erscheinen mindestens eines echten Blatts, das heißt in einer Phase nach Setzen ausgeführt wird.

4. Verfahren zum Verzwergen von Pflanzen nach Anspruch 1-3, wobei die UV-B-Bestrahlung gleichzeitig mit der Pflanzenbewässerung erfolgt.

5. Verfahren zum Verzwergen von Pflanzen nach den Ansprüchen 1-3, wobei die UV-B-Bestrahlung getrennt von der Bewässerung von Pflanzen erfolgt.

6. Verfahren zum Verzwergen von Pflanzen nach Anspruch 5, wobei die UV-B-Bestrahlung im Fall von Gewächshauskultur vorzugsweise nachts, oder im Fall von Kultivieren von Pflanzen in Kultivierungsseinheiten in Innenräumen während des Ausschaltens der photosynthetisch aktiven Quellen erfolgt.

7. Vorrichtung (2) zum Ausführen des Verfahrens nach den Ansprüchen 1 bis 6, umfassend einen konventionellen Bewässerungsausleger (2), der seinerseits mindestens eine Bewässerungshalbstange (3) umfasst, die sich entlang eines vordefinierten Pfads vor und zurück bewegt, um die Pflanzen in dem Gewächshaus zu bewässern
**dadurch gekennzeichnet, dass**
an der Bewässerungshalbstange (3) eine Anzahl von LED-Lampen (5) proportional zu der Länge der Stange (3) an sich befestigt sind und UV-B-Strahlung emittieren,
und dass
sie eine Steuereinheit zum Einstellen der UV-B-Bestrahlungsparameter umfasst: das heißt die Dauer der Bestrahlung, Anzahl der 24-Stunden-Einheiten der Bestrahlung und ob die Bestrahlung gleichzeitig mit einer Bewässerung oder in gegenseitiger Ausschließung ausgeführt wird.

8. Vorrichtung nach Anspruch 7, wobei die UV-B-LED-Lampen (5) mit LEDs versehen sind, die einen Lichtkegel (6) emittieren, der eine Apertur in einem Bereich von 50° bis 130° aufweist.

9. Vorrichtung nach Anspruch 7 oder 8, wobei die LED-Lampen (5) angeordnet sind, sodass sich der Lichtkegel (6), der von jeder LED-Lampe (5) emittiert wird, teilweise mit dem Lichtkegel (6) überlappt, der von den benachbarten LED-Lampen (5) emittiert wird.

10. Vorrichtung nach den Ansprüchen 7 bis 9, wobei die Gleitgeschwindigkeit der UV-B-LED-Lampen (5), die an den Bewässerungshalbstangen (3) befestigt sind, sich in einem Bereich von 0,1 bis 10 m/Min. über den Kulturpflanzen (10) bewegt.

11. Vorrichtung (40, 44) zum Ausführen des Verzwergungsverfahrens, umfassend eine Innenraum-Kultivierungseinheit zum Kultivieren von Zier-, Gartenbau- und aromatischen Pflanzen, die ihrerseits mindestens ein Regal (41) umfasst, über dem mindestens eine LED-Quelle, die eine Photosynthetisierungswirkung aufweist, und mindestens eine LED-Quelle, die UV-B-Strahlung emittiert, bereitgestellt sind, wobei die Lampen durch eine Steuereinheit gesteuert werden, die in der Lage ist, die UV-B-LED-Quellen zu steuern, sodass sie UV-B-Strahlung zum Verzwergen von Pflanzen nach den Ansprüchen 1 bis 6 emittieren.

12. Vorrichtung nach einem oder mehreren der Ansprüche 7 bis 11, wobei der Abstand zwischen UV-B-LED-Quellen (5) und Blattspitze in einem Bereich von 0,2 bis 1 m ist.

13. Vorrichtung nach einem oder mehreren der Ansprüche 7 bis 12, wobei die radiometrische Leistung der Quellen der UV-B-LED-Lampen (5) in einem Bereich von 50 bis 1000 mW pro Lampe/Quelle ist.

## Revendications

1. Procédé destiné à naniser des plantes ornementales et horticoles et des herbes aromatiques qui poussent en serre ou en unités de croissance en intérieur,
les plantes étant exposées à un rayonnement avec des rayonnements UV-B ayant une longueur d'onde de 280 à 315 nm, **caractérisé en ce que** les plantes sont exposées à un rayonnement avec ledit rayonnement UV-B pendant toute la période où la plante se trouve dans une serre ou dans une unité de croissance en intérieur.

2. Procédé destiné à naniser des plantes selon la revendication 1, ledit rayonnement UV-B étant émis par des lampes/sources à DEL (5) à l'aide des paramètres suivants :
- durée d'exposition au rayonnement : 1 à 20 minutes par plante ;
- pour un nombre d'unités de 24h à titre indicatif, entre 10 et 60 unités, variable selon le temps de croissance en serre caractéristique de la plante ;
- puissance radiométrique des lampes à DEL UV-B (5) comprise entre 50 et 1 000 mW par lampe ;
- distance entre les lampes/sources à DEL UV-B et le sommet des feuilles allant de 0,2 à 1 m.

3. Procédé destiné à naniser des plantes selon la revendication 1 ou 2, l'exposition au rayonnement UV-B étant effectué sur des plantes après l'apparition d'au moins une vraie feuille, c'est-à-dire dans une phase postérieure au semis.

4. Procédé destiné à naniser des plantes selon les revendications 1 à 3, l'exposition au rayonnement UV-B se produisant simultanément avec l'irrigation des plantes.

5. Procédé destiné à naniser des plantes selon les revendications 1 à 3, l'exposition au rayonnement UV-B se produisant séparément de l'irrigation des plantes.

6. Procédé destiné à naniser des plantes selon la revendication 5, l'exposition au rayonnement UV-B se produisant de préférence pendant la nuit en cas de culture en serre, ou pendant l'arrêt des sources photosynthétiquement actives dans le cas de croissance de plantes en intérieur dans des unités de croissance.

7. Appareil (2) destiné à effectuer le procédé selon les revendications 1 à 6, comprenant une rampe d'irrigation traditionnelle (2) comprenant à son tour au moins une demi-barre d'irrigation (3) se déplaçant dans les deux sens le long d'un trajet prédéfini pour irriguer les plantes dans la serre
**caractérisé**
**en ce qu'**un nombre de lampes à DEL (5) sont fixées sur la demi-barre d'irrigation (3) proportionnellement à la longueur de la barre elle-même, (3) émettant des rayonnements UV-B,
et
**en ce qu'**il comprend une unité de commande permettant de régler les paramètres d'exposition au rayonnement UV-B : c'est-à-dire la durée d'exposition au rayonnement, le nombre d'unités de 24 heures d'exposition au rayonnement, et si l'exposition au rayonnement est effectuée en même temps que l'irrigation ou de manière mutuellement exclusive.

8. Appareil selon la revendication 7, lesdites lampes à DEL UV-B (5) étant pourvues de DEL émettant un cône de lumière (6) ayant une ouverture allant de 50° à 130°.

9. Appareil selon la revendication 7 ou 8, lesdites lampes à DEL (5) étant disposées de sorte que le cône de lumière (6) émis par chaque lampe à DEL (5) chevauche partiellement le cône de lumière (6) émis par les lampes à DEL adjacentes (5).

10. Appareil selon les revendications 7 à 9, la vitesse de coulissement des lampes à DEL UV-B (5) fixées sur les demi-barres d'irrigation (3) se déplaçant au-dessus des plantes cultivées (10) se trouvant dans la plage de 0,1 à 10 m/min.

11. Appareil (40, 44) destiné à effectuer ledit procédé de nanisme comprenant une unité de croissance en intérieur pour la croissance de plantes ornementales, horticoles et aromatiques, comprenant à son tour au moins une étagère (41) au-dessus de laquelle est prévue au moins une source à DEL ayant une action de photosynthèse et au moins une source à DEL émettant des rayonnements UV-B, lesdites lampes étant commandées par une unité de commande apte à commander lesdites sources à DEL UV-B de sorte qu'elles émettent des rayonnements UV-B pour naniser les plantes selon les revendications 1 à 6.

12. Appareil selon une ou plusieurs des revendications 7 à 11, la distance entre les sources à DEL UV-B (5) et le sommet des feuilles se trouvant dans la plage de 0,2 à 1 m.

13. Appareil selon une ou plusieurs des revendications 7 à 12, la puissance radiométrique desdites sources à DEL UV-B (5) se trouvant dans la plage de 50 à 1 000 mW par lampe/source.
